# EUROPÄISCHE PATENTSCHRIFT

(11) **EP 0 429 915 B1**
(45) Veröffentlichungstag und Bekanntmachung des Hinweises auf die Patenterteilung: **03.03.1993**
(21) Anmeldenummer: 90121405.6
(22) Anmeldetag: 08.11.1990
(51) Int. Cl.: E03C 1/05, F16K 31/40

(54) **Elektrisch gesteuertes Absperrventil und Verwendung desselben**
Electric operated valve and its use
Vanne commandée électriquement et son emploi

(30) Priorität: 28.11.1989 CH 4260/89
(43) Veröffentlichungstag der Anmeldung: 05.06.1991
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 0 312 781
- DE-A- 1 775 108
- FR-A- 2 225 675
- FR-A- 2 335 767

## Beschreibung

Die vorliegende Erfindung betrifft ein elektrisch gesteuertes Absperrventil gemäss dem Oberbegriff des Anspruchs 1 und eine Verwendung desselben.

Ein Absperrventil dieser Art ist aus der EP-A-0 312 781 bekannt. Diese weist einen mit einem ringartigen Ventilsitz zusammenwirkenden membranförmigen Verschlussteil auf. Auf der dem Ventilsitz gegenüberliegenden Seite des Verschlussteils ist ein Vorsteuerraum angeordnet, der mit dem Einlass in Verbindung steht. Im Vorsteuerraum befindet sich ein in Richtung gegen den Verschlussteil federnd vorgespanntes Verschlusselement eines Hilfsventils, das mit einem am Verschlussteil angeordneten Hilfsventilsitz zusammenwirkt. Die Antriebsanordnung des Absperrventils weist einen Elektromotor auf, dessen Drehbewegung der Ausgangswelle über ein Getriebe untersetzt wird. Eine kulissenartige Einrichtung setzt die ausgangsseitige Drehbewegung des Getriebes in eine Linearbewegung eines Stössels um, der auf das Verschlusselement einwirkt, um dieses entgegen der Vorspannkraft in eine vom Verschlussteil abgehobene Stellung zu verbringen. Bei abgehobenem Verschlusselement ist der Vorsteuerraum mit dem Auslass verbunden, was zur Folge hat, dass sich der Verschlussteil vom Ventilsitz abhebt und sich bis zu einem Spalt dem Verschlusselement nähert. Je nach Drehwinkel des Elektromotors wird dadurch das Absperrventil mehr oder weniger geöffnet.

Ein magnetisch gesteuertes Absperrventil, insbesondere für Waschmaschinen, Geschirrspülmaschinen und dergleichen, ist in der DE-A-17 75 108 offenbart. Der Vorsteuerraum auf der einem Ventilsitz abgewandten Seite eines mit diesem zusammenwirkenden membranartigen Verschlussteils ist von einer Haube umschlossen. Mit einem am Verschlussteil angeformten Hilfsventilsitz wirkt ein Verschlussteil aus magnetischem Material zusammen, der im Vorsteuerraum angeordnet und gegen den Hilfsventilsitz vorgespannt ist. Zum Oeffnen des Absperiventils wird ein Permanentmagnet mit Hilfe mechanischer Mittel in axialer oder seitlicher Richtung zur Haube verschoben, so dass unter der Wirkung des Permanentmagneten das Verschlusselement vom Hilfsventilsitz abgehoben wird. Wird der Permanentmagnet aus dem Bereich der Haube entfernt, legt sich der Verschlussteil unter der Kraft der auf das Verschlusselement wirkenden Feder an den Ventilsitz an.

Weiter weisen Absperrventile, wie sie beispielsweise von der Firma Honeywell-Lucifer SA, Genf, hergestellt und vertrieben werden, ein membranförmiges Verschlussteil auf, das mit einem ringförmigen Ventilsitz zusammenwirkt. Um den Ventilsitz herum verläuft ein gegen das Verschlussteil hin offener mit einem Einlass verbundener Ringkanal. Dieser ist über einen Durchlass im Verschlussteil mit einem auf der anderen Seite des Verschlussteils vorgesehenen Vorsteuerraum verbunden. In diesem ist ein Hilfsventil vorgesehen, das ein mit einem Hilfsventilsitz zusammenwirkendes Verschlusselement aufweist. Der Hilfsventilsitz ist am Verschlussteil ausgebildet und über eine Oeffnung mit einem von Ventilsitz begrenzten Auslass verwunden. Das im Vorsteuerraum angeordnete Verschlusselement ist als Tauchanker ausgebildet und mittels eines ortsfest angeordneten, den Vorsteuerraum umgreifenden Elektromagneten vom Hilfsventilsitz abhebbar. Bei nichterregtem Elektromagneten liegt das Verschlusselement am Hilfsventilsitz an und der Druck im Innern des Vorsteuerraumes entspricht dem Druck im Einlass des Absperrventils. Infolge des Flächenunterschiedes der gegenseitigen Druckbeaufschlagung des membranförmigen Verschlussteils im Bereich des Ringkanals bzw. des Vorsteuerraumes wird der Verschlussteil auf den Ventilsitz gepresst. Das Absperrventil ist geschlossen. Zum Oeffnen des Absperrventils wird das Verschlusselement durch Erregen des Elektromagneten vom Hilfsventilsitz abgehoben. Der Vorsteuerraum wird dadurch mit dem Auslass verbunden was zur Folge hat, dass der Druck im Vorsteuerraum sinkt, da die den Vorsteuerraum mit dem Auslass verbindende Oeffnung eine grösseren Strömungsquerschnitt aufweist, als der den Ringkanal mit dem Vorsteuerraum verbindende Durchlass. Dadurch wird der Verschlussteil vom Ventilsitz abgehoben und die Wasserströmung von Ringkanal um den Ventilsitz herum in den Auslass ist freigegeben. Sobald durch Entregen des Elektromagneten das Verschlusselement wieder am Hilfsventilsitz zur Anlage kommt, steigt der Druck im Vorsteuerraum wieder an, da das Ausfliessen des Wassers aus diesem nun verhindert ist, was zur Folge hat, dass der Verschlussteil am Ventilsitz zur Anlage kommt. Zum Oeffnen und Offenhalten dieses Absperrventils wird eine erhebliche Menge elektrischer Energie benötigt.

Es ist deshalb eine Aufgabe der vorliegenden Erfindung ein gattungsgemässes Absperrventil zu schaffen, das bei einfachem Aufkau für seine Betätigung äusseist wenig Energie benötigt. Im weitern soll eine vorteilhafte Verwendung eines solchen Absperrventils vorgeschlagen werden.

Diese Aufgabe wird durch die Merkmale des kennzeichnenden Teiles des Anspruchs 1 gelöst. Das Verbringen einer Permanentmagnetanordnung in und ausser Einwirkbereich auf das Hilfsventil benötigt sehr wenig Energie und insbesondere wird für das Offenhalten des Hilfsventils keine Energie benötigt.

Vorteilhafterweise werden solche Absperrventile in einer elektrisch gesteuerten sanitären Armatur gemäss Anspruch 5 verwendet. Da die Absperrventile äussest wenig Energie benötigen, lassen sich solche Armaturen über längere Zeit mittels einer Batterie bzw. eines Akkumulators betreiben.

Bevorzugte Ausbildungsformen des Absperrventils und bevorzugte Ausgestaltungen der Verwendung solcher Absperrventile sind in den abhängigen Ansprüchen angegeben.

Die Erfindung wird nun anhand eines in der Zeichnung dargestellten Ausführungsbeispieles näher erläutert. Es zeigen rein schematisch:
Fig. 1 und 2 senkrecht aufeinanderstehende Vertikalschnitte einer Mischarmatur, wobei die Stömungswege bereichsweise in die Schnittebenen verlegt gezeigt sind, und
Fig. 3 einen Teil der Fig. 1 vergrössert.

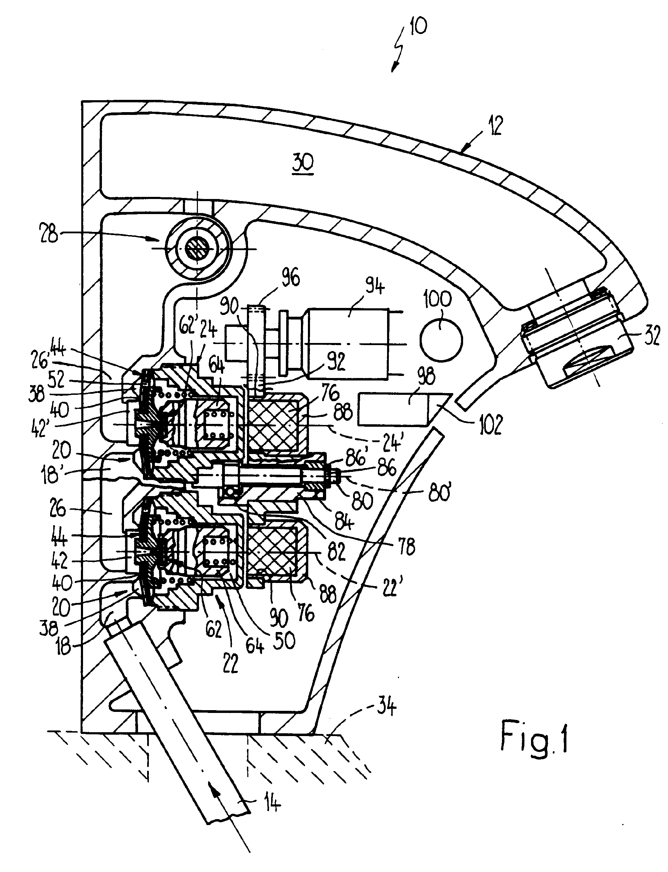

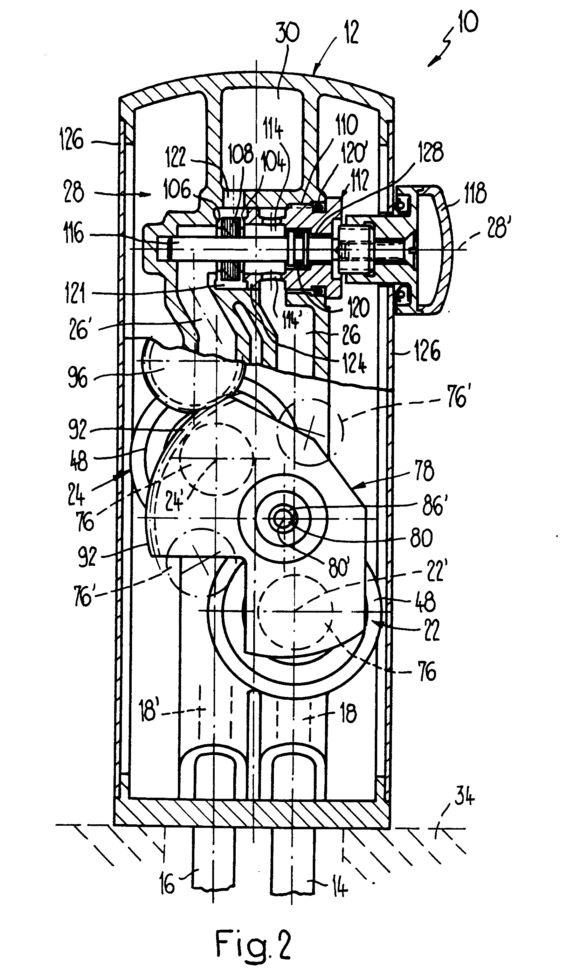

Die in den Fig. 1 bis 3 gezeigte Mischarmatur 10 weist einen gegossenen Grundkörper 12 auf, in welchem die Strömungswege für das Kalt-, Warm- bzw. Mischwasser ausgespart sind. Das über Zuflussleitungen 14, 16 der Mischarmatur 10 zugeführte Warm- bzw. Kaltwasser wird über entsprechende Aussparungen 18, 18′ im Grundkörper 12 Einlässen 20 von Absperrventilen 22, 24 zugeleitet. Auslasseitig sind die beiden Absperrventile 22, 24 über je eine weitere Aussparung 26 bzw. 26′ mit einem Mischventil 28 strömungsverbunden, von welchem das Mischwasser durch eine Auslassaussparung 30 im Grundkörper 12 einem Ausflusskopf 32 zugeleitet wird. Die Mischarmatur 10 ist in bekannter Art und Weise an einem in den Figuren 1 und 2 angedeuteten Waschbecken 34 befestigt.

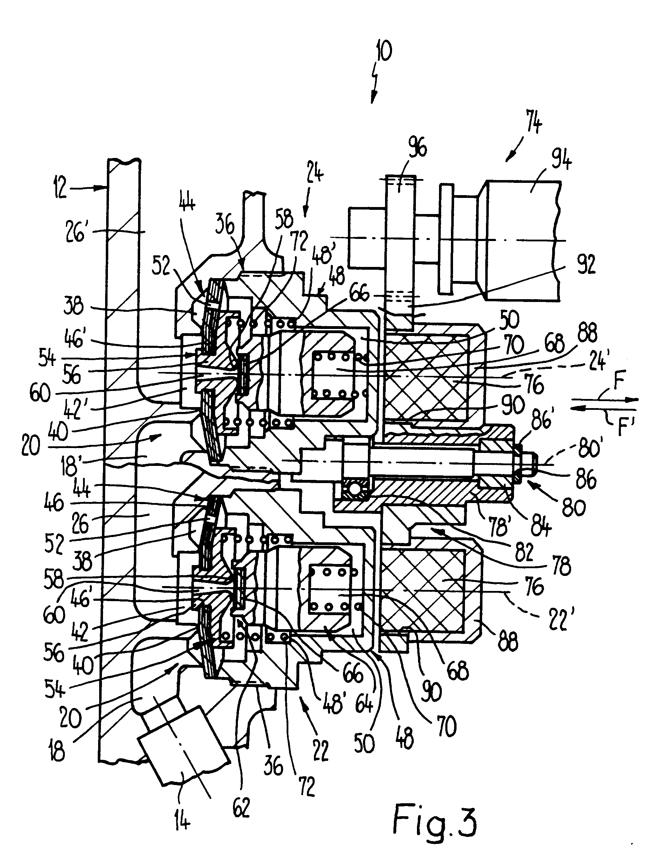

Das Absperrventil 22 für Warmwasser und Absperrventil 24 für Kaltwasser sind gleich und im wesentlichen rotationssymmetrisch ausgebildet und benachbart zu einander, übereinander und schrägversetzt am Grundkörper 12 angeordnet, wobei die Achsen 22′ bzw. 24′ der beiden Absperrventile 22, 24 parallel zueinander verlaufen. Die Absperrventile 22, 24 sind in im wesentlichen zylinderförmige Ausnehmungen 36 im Grundkörper 12 eingesetzt. Im Bodenbereich jeder Ausnehmung 36 ist ein in axialer Richtung offener, mit dem betreffenden Einlass 20 verbundener Ringkanal 38 ausgebildet, welcher in radialer Richtung bezüglich der Achsen 22′, 24′ innen von einem ringförmigen Ventilsitz 40 begrenzt ist (vergl. insbesondere Fig. 3). Der Auslass 42, 42′ jedes Absperrventils 22 bzw. 24 ist vom betreffenden Ventilsitz 40 umrandet und mündet in die betreffende weitere Aussparung 26, 26′.

Die beiden Absperrventile 22, 24 sind in der Fig. 3 vergrössert dargestellt. Der besseren Uebersichtlichkeit halber sind deshalb in der Fig. 1 nicht alle die Absperrventile 22, 24 betreffenden Bezugszeichen angegeben, die in Fig. 3 eingetragen sind.

Ringkanal 38, Ventilsitz 40 und Auslass 42 bzw. 42′ sind von einem im Bodenbereich der Ausnehmung 36 vorgesehenen Verschlussteil 44 überspannt. Dieser weist eine scheibenförmige Membrane 46 aus gummielastischem Material auf, die entlang ihrer Periferie zwischen einem Absatz 36′ der Ausnehmung 36 und dem diesseitigen Ende eines haubenförmigen, in die Ausnehmung 36 eingeschraubten Deckels 48 aus nichtmagnetisierbarem Material, beispielsweise Messing, eingeklemmt ist. Das Verschlussteil 44 und der Deckel 48 umschliessen einen Vorsteuerraum 50, der über einen Durchlass 52 in der Membran 46 mit dem Ringkanal 38 strömungsverbunden ist. Der Vorsteuerraum 50 befindet sich somit auf der bezüglich des Ventilsitz 40 abgewandten Seite des Verschlussteils 44. Der Verschlussteil 44 weist weiter vorsteuerraumseitig ein ungefähr scheibenförmiges Verstärkungsglied 54 auf, das mittels eines eine zentrale Oeffnung 46′ in der Membran 46 durchgreifenden Haltekopfes 56 an dieser fixiert ist. Die Membrane 46 überspannt den Ringkanal 38 und teilweise den Auslass 42, 42′ und das Verstärkungsglied 54 überlappt die Membrane 46, in radialer Richtung gesehen, bis über den Ventilsitz 40 hinaus.

Am Verstärkungsglied 54 ist ein in Richtung gegen den Vorsteuerraum 50 vorstehender, ringförmiger Hilfsventilsitz 58 angeformt, welcher eine im Bereich der Achse 22′, 24′ das Verstärkungsglied 54 durchdringende Pilotöffnung 60 begrenzt. Diese verbindet den Vorsteuerraum 50 mit dem Auslass 42, 42′. Der Hilfsventilsitz 58 ist Teil eines Hilfsventils 62, 62′ und wirkt mit einem im Innern des Vorsteuerraumes 50 angeordneten, im wesentlichen zylinderförmigen Verschlusselement 64 zusammen. Dieses weist auf der dem Hilfsventilsitz 58 zugewandten Seite eine Dichtungsscheibe 66 auf, die die Pilotöffnung 60 sowie den Hilfsventilsitz 58 übergreift und bei geschlossenem Hilfsventil 62, 62′ am Hilfsventilsitz 58 anliegt um die Verbindung durch die Pilotöffnung 60 zwischen dem Vorsteuerraum 50 und dem Auslass 42, 42′ zu unterbrechen. Auf der dem Hilfsventilsitz 58 abgewandten Seite ist im Verschlusselement 64 ein Sackloch 68 ausgenommen, in welchem eine Hilfsventildruckfeder 70 eingreift, die sich einerends am Verschlusselement 64 und andernends am Deckel 48 abstützt.

Im Innern weist der Deckel 48 einen Absatz 48′ auf, an welchem sich das eine Ende einer Druckfeder 72 abstützt, deren anderes Ende am Verstärkungsglied 54 anliegt. Diese Druckfeder 72 drückt den Verschlussteil 44 gegen den Ventilsitz 40.

Die Antriebsanordnung 74 für die beiden Hilfsventile 62, 62′ weist zwei je einem Hilfsventil 62, 62′ zugeordnete Permanentmagnete 76 auf, die an einem im wesentlichen plattenförmigen Schwenkkörper 78 angeordnet sind. Der Schwenkkörper 78 ist in Richtung der Achsen 22′, 24′ gesehen von den Deckeln 48 der Absperrventile 22, 24 geringfügig beabstandet und über ein mit ihm fest verbundenes hohlzylinderförmiges Lagerteil 78′ an einem an Grundkörper 12 befestigten Schaft 80 schwenkbar gelagert. Die Achse 80′ des Schaftes 80 verläuft parallel zu den Achsen 22′, 24′ und befindet sich von diesen ungefähr gleichweit beabstandet im Bereich zwischen den beiden Absperrventilen 22, 24. Eine Bewegung des Schwenkkörpers 78 in Richtung gegen die Absperrventile 22, 24 hin wird durch ein Kugellager 82 verhindert, welches sich einerseits am Schaft 80 und andererseits am Lagerteil 78′ abstützt. Am vom Kugellager 82 entfernten Endbereich weist der Lagerteil 78′ eine Lagerhülse 84 auf, welche am Schaft 80 gleitet. Im diesseitigen Endbereich des Schaftes 80 ist eine umlaufende Nut 86 vor gesehen, in welcher ein Federring 86′ angeordnet ist, welcher ein Bewegen des Schwenkkörpers 78 von den Absperrventilen 22, 24 weg, verhindert. Die Permanentmagnete 76 sind in einer hutförmigen Abdeckung 88 gehalten, welche die Permantmagnete 76 auf allen, ausser den Absperrventilen 22, 24 zugewandten Seiten umschliesst. Die Abdeckungen 88 sind in kreisförmige Oeffnungen 90 im Schwenkkörper 78 eingesetzt. In der in den Figuren gezeigten Arbeitsstellung des Schwenkkörpers 78 fallen die Achsen der Permanentmagnete 76 mit den Achsen 22′, 24′ zusammen. Durch Verschwenken des Schwenkkörpers 78 um den Schaft 80 im Uhrzeigersinn (Fig. 2) sind die Permanentmagnete 76 aus dem Einwirkbereich auf die Verschlusselemente 64 der Hilfsventile 62, 62′ in eine in der Fig. 2 strichpunktiert angegebene Ruhestellung 76′ verschwenkbar. Der Schwenkwinkel des Schwenkkörpers 78 beträgt ungefähr 60°. Zu diesem Zweck ist am Schwenkkörper 78 ein zur Achse 80′ koaxiales Zahradsegment 92 angeformt, das mit einem an einem als Gleichstrommotor mit integriertem Untersetzungsgetriebe ausgebildeten Antrieb 94 angeordneten Ritzel 96 kämmt.

Der Antrieb 94 ist von einer elektronischen Steuerung 98 angesteuert, welche mittels einer schematisch dargestellten Batterie 100 gespeist ist. Die Steuerung 98 weist einen Sensor 102 auf, welcher das Vorhandensein von zu waschenden Händen im Wirkbereich des Sensors 102, d.h. im Bereich des Waschbeckens 34 erkennt.

Das Mischventil 28 weist zwei im wesentlichen kreisringförmige Mischventilsitze 104 und 106 auf, die miteinander fluchten, in Richtung der Achse 28′ des Mischventils 28 voneinander beabstandet sind und im wesentlichen in Ebenen liegen, die senkrecht auf dieser Achse 28′ stehen (siehe Fig. 2). Im Bereich zwischen den beiden Mischventilsitzen 104, 106 ist eine Scheibe 108 aus gummielastischen Material vorgesehen, deren axialen Seitenflächen 108′ mit den Mischventilsitzen 104 bzw. 106 zusammenwirken und je einen ringförmigen Auslasspalt begrenzen. Der Mischventilsitz 106 ist an einem Absatz einer in Richtung der Achse 28′ verlaufenden sacklochförmigen Ausnehmung 110 im Grundkörper 12 ausgebildet und der andere Mischventilsitz 104 ist durch das Ende eines in die Ausnehmung 110 eingeschraubten, hülsenförmigen Zapfens 112 gebildet. Der Mischventilsitz 106 begrenzt die weitere Aussparung 26′, welche den Auslass 42′ des Absperrventils 24 für das Kaltwasser mit dem Mischventil 28 verbindet. Der Zapfen 112 weist einen gegen die Scheibe 108 hin offenen und vom betreffenden Mischventilsitz 104 begrenzten Hohlraum 114 auf, der über radiale Durchlässe 114′ mit der weiteren Aussparung 26 in Verbindung steht, welche den Auslass 42 des Absperrventils 22 für Warmwasser mit dem Mischventil 28 verbindet. Durch den Zapfen 112 hindurch ist ein Hubschaft 116 geführt, auf welchem die Scheibe 108 festsitzt und an deren äusseren freien Ende ein Betätigungskopf 118 drehfest angeordnet ist. Am inneren Ende ist der Hubschaft 116 am Grundkörper 12 drehbar gelagert. Der Hubschaft 116 weist ein Aussengewinde 120 auf, mittels welchem er in einem entsprechenden Innengewinde im Zapfen 112 derart geführt ist, dass er sich beim Drehen des Betätigungskopfes 118 um die Achse 28′ in axialer Richtung hin- und herbewegen lässt. Entlang dem Hubschaft 116 ist der Hohlraum 114 mittels eines O-Rings 120 abgedichtet, welcher in einer entsprechenden Nut im Hubschaft 116 sitzt und an der Innenwand des Zapfens 112 gleitet. Ein weiterer O-Ring 120′ ist zwischen dem äusseren Endbereich des Zapfens 112 und dem Anfangsbereich der Ausnehmung 110 vorgesehen.

Ein ringförmiger, die Scheibe 108 umfassenden Kanal 121 zwischen den beiden Mischventilsitzen 104 und 106 ist durch eine die Ausnehmung 110 mit der Auslassaussparung 30 verbindende Oeffnung 122 strömungverbunden. Dieser ringförmige Kanal 121 ist von dem mit der weiteren Aussparung 26 strömungsverbundenen Bereich der Ausnehmung 110 durch einen am Zapfen 112 angeformten umlaufenden Wulst 124 abgedichtet.

Der Vollständigkeit halber sei noch erwähnt, dass die Mischarmatur 10 seitliche Abdeckungen 126 aufweist, welche die aktiven Teile der Mischarmatur 10 abdecken und wobei der Betätigungskopf 118 des Mischventils 28 die eine seitliche Abdeckung 126 frei drehbar durchdringt, um das Betätigen des Betätigungskopfes 118 von ausserhalb der Armatur 10 zu ermöglichen.

Befinden sich die Permanentmagnete 76 in der in den Figuren dargestellten Arbeitsstellung wirken diese mit einer Kraft F (Fig. 3) auf das betreffende Verschlusselement 64 ein und heben dieses entgegen der Kraft der Hilfsventildruckfeder 70 und der resultierenden Kraft des Wasserdruckes, in Richtung der Achse 22′, 24′, vom Hilfsventilsitz 40 ab. Mit F′ ist die magnetische Rückwirkkraft bezeichnet, welche gleich gross wie die Kraft F aber dieser entgegengesetzt ist und die an den Permanentmagneten 76 angreift. Diese magnetische Rückwirkkraft F′ verläuft bei sich in Arbeitsstellung befindendem Permanentmagneten 76 parallel zur Achse 80′ und etwa senkrecht zur Bewegungsrichtung der Permantmagnete 76 beim Verschwenken um die Achse 80′.

Die in den Figuren gezeigte Mischarmatur 10 funktioniert wie folgt. Erkennt der Sensor 102 keine zu waschenden Hände so befinden sich die Permanentmagnete 76 zusammen mit dem Schwenkkörper 78 in der in der Fig. 2 stichpunktiert angedeuteten Ruhestellung 76′. Die Hilfsventile 62, 62′ sind geschlossen, die Dichtungsscheiben 66 der Verschlusselemente 64 liegen an den betreffenden Hilfsventilsitzen 58 an und trennen somit die Vorsteuerräume 50 vom betreffenden Auslass 42, 42′. Infolge der Strömungsverbindung zwischen dem Ringkanal 38 und Vorsteuerraum 50 durch den Durchlass 52 entspricht der Wasserdruck im Innern des Vorsteuerraums 50 dem Wasserdruck im betreffenden Einlass 20. Auslasseitig der Absperrventile 22, 24 entspricht der Druck im wesentlichen dem Umgebungsdruck, wodurch das Verschlussteil 44 mit einer vom Wasserdruck herrührenden Kraft gegen den Ventilsitz 58 gepresst ist die proportional zur Druckdifferenz zwischen Vorsteuerraum 50 und Auslass 42, 42′ und zur Differenz der mit Druck beaufschlagten, dem Vorsteuerraum 50 bzw. Ringkanal 28 zugewandten Flächen des Verschlussteils 44 ist. Zusätzlich wird das Verschlussteil 44 durch die Hilfventildruckfeder 70 und Druckfeder 72 gegen den Ventilsitz 40 gedrückt. Das Verstärkungsglied 54 verhindert dabei ein Ueberbeanspruchung und ein Ausbuchten der Membrane 46 in den Auslass 42 bzw. 42′. Im weiteren wird das Verschlusselement 64 durch die Kraft der Hilfventildruckfeder 70 und eine Kraft, die proportional zur Druckdifferenz im Vorsteuerraum 50 und Auslass 42, 42′ und zur vom Hilfsventilsitz 58 begrenzten Fläche der Dichtungsscheibe 66 ist, gegen den Hilfsventilsitz 58 gepresst. Die Absperrventile 22, 24 sind somit geschlossen.

Werden nun zu waschende Hände in den Erkennungsbereich des Sensors 102 gebracht, so gibt dieser ein entsprechendes Signal an die elektronische Steuerung 98 ab. Diese steuert den Antrieb 94 solange an, bis sich der Schwenkkörper 78 mit dem Permanentmagneten 76 im Gegenuhrzeigersinn (Fig. 2) in deren Arbeitsstellung verschwenkt hat, in welcher die Permanentmagnete 76 mit den Verschlusselementen 64 der Hilfsventile 62, 62′ fluchten. Durch das von den Permanentmagneten 76 erzeugte Magnetfeld werden die Verschlusselemente 64 mit der Kraft F entgegen der Kraft der Druckfeder 70 und der resultierenden Kraft durch den Wasserdruck vom Hilfsventilsitz 58 abgehoben und in Richtung gegen die Permanentmagnete 76 gezogen. Dabei beginnt Wasser aus den Vorsteuerräumen 50 durch die Pilotöffnungen 60 hindurch in die Auslässe 42, 42′ zu fliessen. Da nun der Strömungsquerschnitt der Pilotöffnungen 66 grösser ist als der Strömungsquerschnitt der Durchlässe 52 sinkt der Druck in den Vorsteuerräumen 50. Da aber in den Ringkanälen 38 das zugeleitete Wasser mit hohem Druck gegen das Verschlussteil 44 drückt, wird dieses langsam vom Ventilsitz 40 abgehoben, wodurch nun das durch die Aussparungen 18, 18′ zugeführte Wasser von den Ringkanälen 38 um die Ventilsitze 40 herum in die Auslässe 42, 42′ fliessen kann. Die Absperrventile 22, 24 sind geöffnet. Das von den Absperrventilen 22, 24 durch die weiteren Aussparungen 26, 26′ dem Mischventil 28 zugeführte Warm- und Kaltwasser wird dort gemischt und durch die Ausslassaussparung 30 dem Ausflusskopf 32 zugeleitet.

Durch Drehen am Betätigungskopf 118 kann nun der Hubschaft 116 zusammen mit der daraufsitzenden Scheibe 108 wahlweise gegen den einen oder anderen Mischventilsitz 104 bzw. 106 hinverschoben werden. Dabei verändern sich der Durchflussquerschnitt zwischen der Scheibe 108 und den Mischventilsitzen 104 bzw. 106 gegengleich, was dazu führt, dass mehr oder weniger Kalt- bzw. Warmwasser der Auslassaussparung 30 zugeleitet wird. Die Mischwassertemperatur ist somit durch Drehen am Betätigungskopf 118 einstellbar. Wird die Scheibe 108 an einen Mischventilsitz 104 bzw. 106 zur Anlage gebracht, kann somit nur noch Warmwasser bzw. Kaltwasser dem Ausflusskopf 32 zufliessen.

Werden nun die gewaschenen Hände aus dem Erkennungsbereich des Sensors 102 entfernt, speist die elektronische Steuerung 98 den Antrieb 94 gegensinnig, was zur Folge hat, dass die Permanentmagnete 76 mit dem Schwenkkörper 78 in ihre Ruhelage 76′ im Uhrzeigersinn zurückverschwenkt werden. Dabei gelangen die Permanentmagnete 76 aus dem Einwirkbereich auf die Verschlusselemente 64, was zur Folge hat, dass diese durch die Kraft der Hilfsventildruckfedern 70 an den entsprechenden Hilfsventilsitz 58 zur Anlage gebracht werden. Es kann somit kein Wasser mehr aus dem Vorsteuerraum 50 durch die Pilotöffnung 60 hindurch ausfliessen. Es kommt somit wieder zu einem Druckausgleich zwischen dem Wasser im Ringkanal 38 und im Vorsteuerraum 50. Das Verschlussteil 44 wird unter der Kraft der Druckfeder 72, der Hilfsventildruckfeder 70 und der resultierenden Kraft aus dem Druck- und Flächenunterschied beidseits der Verschlussteils 44 an den Ventilsitz 40 zur Anlage gebracht. Der Wasserfluss zwischen dem Ventilsitz 40 und dem Verschlussteil 44 wird dabei langsam verkleinert bis er total unterbunden ist. Dieses langsame Verkleinern der ausströmenden Wassermenge verhindert Druckstösse in den Zuflussleitungen 14 und 16. Die Absperrventile 22, 24 sind geschlossen.

Die magnetische Rückwirkkraft F′ wird jeweils von der Lagerung des Schwenkkörpers 78 aufgenommen. Die Schwenkrichtung der Permanentmagnete 76 verläuft in der Arbeitsstellung der Permanentmagnete 76 rechtwinklig zur magnetischen Rückwirkkraft F′ und im Anfangsbereich der Ausschwenkbewegung aus dem Einwirkbereich auf die Hilfsventile 62, 62′ quer dazu. Es ist zu beachten, dass der Antrieb 94 nur die Komponente der magnetischen Rückwirkungskraft F′ in tangentialer Richtung bezüglich der Achse 80′ aufbringen muss. Diese Kraft ist im Verhältnis zur magnetischen Rückwirkkraft F′ relativ klein, was dazu führt, dass das Betätigen der Hilfsventile 62, 62′ äusserst wenig Energie benötigt. Diese Energie zum Betätigen der Armatur 10 kann nochmals verringert werden, wenn die in Bewegungsrichtung der Permanentmagnete 76 wirkende Komponente der magnetischen Rückwirkkraft F′ beispielsweise mittels einer Federanordnung kompensiert wird. In diesem Fall hat der Antrieb 94 nur noch die Kräfte für die Beschleunigung der bewegten Massen und das Ueberwinden der Reibung aufzubringen. Insbesondere die Beschleunigungskräfte können kleingehalten werden, wenn die Massen mit kleinen Beschleunigungen bewegt werden. Dies ist bei Mischarmaturen 10 durchaus zulässig.

Es ist selbstverständlich auch denkbar, den Gleichstromgetriebemotor durch einen anderen Antrieb zu ersetzen. So könnten die Permanentmagnete 76 und der Schwenkkörper 78 beispielsweise mittels einer Elektromagnetanordnung verschwenkt werden.

Um die Steuerung 98 zu vereinfachen, ist es auch denkbar, in der Arbeits- und Ruhestellung der Permanentmagnete 76 ortsfeste Reedrelais vorzusehen, die ansprechen, sobald die betreffende Stellung erreicht ist. Im weitern könnten die Permanentmagnete 76 auch mittels eines Kurbeltriebes hin- und hergeschwenkt werden, was den Vorteil hat, dass der Antrieb immer in derselben Drehrichtung drehen kann. Dies hat wiederum eine Vereinfachung der elektronischen Steuerung zur Folge.

Der Vollständigkeit halber sei auch noch erwähnt, dass die Permanentmagnete 76 um eine Achse, die im wesentlichen rechtwinklig zu den Achsen 22′, 24′ verläuft, aus und in den Einwirkbereich auf die Hilfsventile 62, 62′ verschwenkt werden kann.

In den Fig. 1 bis 3 sind zwei Absperrventile 22, 24 gezeigt, die mittels einer gemeinsamen Antriebsanordnung 74 betätigt werden. Selbstverständlich kann ein einzelnes Absperrventil auf analoge Art und Weise mittels eines Permanentmagneten gesteuert sein.

Selbstverständlich sind auch Armaturen mit nur einem einzigen Absperrventil denkbar, das beispielsweise bei einer Mischarmatur das Mischwasser oder bei einer Armatur mit nur einer Zuleitung des Wasserfluss dieser Zuleitung freigebbar sperrt.

## Patentansprüche

1. Elektrisch gesteuertes Absperrventil für ein fliessfähiges Medium, insbesondere Wasser, mit einem Einlass (20), einem Auslass (26,26′), und einem Verschlussteil (44), auf dessen einen Seite ein mit diesem zusammenwirkender Ventilsitz (40) und auf dessen andern Seite ein über einen Durchlass (52) mit dem Einlass (20) verbundener Vorsteuerraum (50) angeordnet ist, der mittels eines darin angeordneten Hilfsventils (62,62′) zum Oeffnen und Schliessen des Absperrventils (22,24) mit dem Auslass (26,26′) verbindbar beziehungsweise von diesem abtrennbar ist, wobei das Hilfsventil (62,62′) ein mit einem am Verschlussteil (44) angeordneten Hilfsventilsitz (58) zusammenwirkendes Verschlusselement (64) aufweist, das mit einer elektrisch gespeisten Antriebsanordnung (74) von dem Hilfsventilsitz (58) abhebbar ist, dadurch gekennzeichnet, dass der Vorsteuerraum (50) auf der dem Verschlussteil (44) abgewandten Seite von einem Deckel (48) aus im wesentlichen nicht magnetisierbarem Material begrenzt ist und die Antriebsanordnung (74) eine Permanentmagnetanordnung (76) aufweist, die mittels eines elektrisch gespeisten Antriebs (94) über den Deckel (48) hinweg in und ausser Einwirkung auf das Verschlusselement (64) bringbar ist, um beim Verbringen in den bereich des Deckels (48) das Verschlusselement (64) vom Hilfsventilsitz (58) abzuheben.

2. Absperrventil nach Anspruch 1, dadurch gekennzeichnet, dass die Bewegungsrichtung der Permanentmagnetanordnung (76) quer zur Richtung der magnetischen Rückwirkkraft (F′) auf die Permanentmagnetanordnung (76) verläuft.

3. Absperrventil nach Anspruch 2, dadurch gekennzeichnet, dass die Permanentmagnetanordnung (76) um eine im wesentlichen parallel zur Richtung der Rückwirkkraft (F′) verlaufende Achse (80′) schwenkbar ist.

4. Absperrventil nach einem der Ansprüche 1 bis 3, dadurch gekennzeichnet, dass die Permanentmagnetanordnung (76) an einem drehbar gelagerten Schwenkkörper (78) angeordnet ist, welcher vorzugsweise mittels eines Elektromotores (94) antreibbar ist.

5. Verwendung des Absperrventils nach einem der Ansprüche 1 bis 4 in einer elektrisch gesteuerten sanitären Armatur (10), insbesondere Waschbeckenarmatur.

6. Verwendung nach Anspruch 5, dadurch gekennzeichnet, dass die Armatur (10) einen Warm- und einen Kaltwasserzufluss (14, 16) und einen Ausfluss (32) aufweist und mit je einem zum freigebbaren Sperren des Warm- und Kaltwasserflusses zwischen dem betreffenden Zufluss (14, 16) und dem Ausfluss (32) angeordneten Absperrventil (22, 24) versehen ist, wobei die Permanetmagnetanordnungen (76) zum Betätigen der beiden Hilfsventile (62, 62′) mittels eines gemeinsamen Antriebs (94) in und ausser Einwirkung auf die Verschlusselemente (64) der Hilfsventile (62, 62′) bringbar sind.

7. Verwendung nach Anspruch 6, dadurch gekennzeichnet, dass die Absperrventile (22, 24) nebeineinander und im wesentlichen parallel zueinander in der Armatur (10), vorzugsweise in einem gemeinsamen Grundkörper (12) angeordnet und die Permanentmagnetanordnungen (76) an einem gemeinsamen Schwenkkörper (78) vorgesehen sind, welcher um eine vorzugsweise zwischen den Absperrventilen (22, 24) verlaufenden Drehachse (80′) schwenkbar ist.

8. Verwendung nach Anspruch 7, dadurch gekennzeichnet, dass der Schwenkkörper (78) ein zur Drehachse (80′) koaxiales Zahnradsegment (92) aufweist, das mit einem von elektrisch gespeisten Antrieb (94) angetriebenen Ritzel (96) kämmt.

9. Verwendung nach einem der Ansprüche 6 bis 8, dadurch gekennzeichnet, dass den beiden Absperrventilen (22, 24) ein Mischventil (28) nachgeschaltet ist, das vorzugsweise zwei voneinander beabstandete, im wesentlichen miteinander fluchtende und gegeneinander gerichtete ringförmige Mischventilsitze (104, 106), die von den Absperrventilen (22, 24) herkommende Leitungen (26, 26′) begrenzen, und eine zwischen den Mischventilsitzen (104, 106) hin und her verschiebbare, mit ihren Seitenflächen mit diesen zusammenwirkende Scheibe (108), vorzugsweise aus gummielastischem Material aufweist, und die Ausflussöffnungen zwischen den Mischventilsitzen (104, 106) und der Scheibe (108) mit dem Ausfluss (32) verbunden sind.

## Claims

1. Electrically controlled shut-off valve for a free-flowing medium, in particular water, having an inlet (20), an outlet (26, 26′) and a closing part (44), on the one side of which there is disposed a valve seat (40) interacting therewith and on the other side of which a pre-control chamber (50), connected via a conduit (52) to the inlet (20), which pre-control chamber, by means of an auxiliary valve (62, 62′) disposed therein, can be connected to or separated from the outlet (26, 26′) in order to open and close the shut-off valve (22, 24), the auxiliary valve (62, 62′) exhibiting a closing element (64) interacting with an auxiliary valve seat (58) disposed on the closing part (44), which closing element can be raised from the auxiliary valve seat (58) by an electrically powered drive device (74), characterised in that the pre-control chamber (50) is limited, on the side facing away from the closing part (44), by a cover (48) of essentially non-magnetisable material and the drive device (74) exhibits a permanent magnet device (76), which can be brought over the cover (48), by means of an electrically powered drive mechanism (94), into and out of influence upon the closing element (64) so that, when moved into the area of the cover (48), it is able to raise the closing element (64) from the auxiliary valve seat (58).

2. Shut-off valve according to Claim 1, characterised in that the direction of movement of the permanent magnet device (76) runs transversely to the direction of the magnetic reaction force (F′) upon the permanent magnet device (76).

3. Shut-off valve according to Claim 2, characterised in that the permanent magnet device (76) is pivotable about an axis (80′) running essentially parallel to the direction of the reaction force (F′).

4. Shut-off valve according to one of Claims 1 to 3, characterised in that the permanent magnet device (76) is disposed on a rotatably mounted swivel element (78), which can preferably be driven by means of an electric motor (94).

5. Use of the shut-off valve according to one of Claims 1 to 4 in an electrically controlled sanitary fitting (10), in particular a wash basin fitting.

6. Use according to Claim 5, characterised in that the fitting (10) exhibits a hot and cold water supply (14, 16) and an outflow (32) and is provided in each case with a shut-off valve (22, 24) which is disposed, for the releasable blocking of the hot and cold water supply, between the particular supply (14, 16) and the outflow (32), the permanent magnet devices (76), for the actuation of the two auxiliary valves (62, 62′), being able to be brought by means of a common drive mechanism (94) into and out of influence upon the closing elements (64) of the auxiliary valves (62, 62′).

7. Use according to Claim 6, characterised in that the shut-off valves (22, 24) are disposed next to each other and essentially parallel to each other in the fitting (10), preferably in a common basic element (12), and the permanent magnet devices (76) are provided on a common swivel element (78), which is pivotable about a rotational axis (80′) running preferably between the shut-off valves (22, 24).

8. Use according to Claim 7, characterised in that the swivel element (78) exhibits a gear segment (92) which is coaxial with the rotational axis (80′) and which meshes with a pinion (96) driven by the electrically powered drive mechanism (94).

9. Use according to one of Claims 6 to 8, characterised in that a mixing valve (28) is connected downstream from the two shut-off valves (22, 24), which mixing valve preferably exhibits two annular mixing valve seats (104, 106) which are spaced apart, lie substantially flush to each other and are counter-directed and which limit pipes (26, 26′) originating from the shut-off valves (22, 24), and a washer (108), preferably of elastomeric material, which can be displaced backwards and forwards between the mixing valve seats (104, 106) and interacts with these by means of its lateral surfaces, and the outflow openings between the mixing valve seats (104, 106) and the washer (108) are connected to the outflow (32).

## Revendications

1. Soupape d'isolement à commande électrique, pour un milieu liquide, en particulier de l'eau, avec une admission (20), un échappement (26,26′), et une partie d'obturation (44), sur un côté de laquelle est disposé un siège de soupape (40) coopérant avec la partie d'obturation (44) et sur l'autre côté de laquelle est disposé une enceinte de pilotage (50), reliée à l'admission (20) par l'intermédiaire d'un passage (52) et respectivement réunie ou isolée de l'échappement (26,26′) au moyen d'une soupape auxiliaire (62,62′) disposée à l'intérieur, en vue d'ouvrir et de fermer la soupape d'isolement (22,24), la soupape auxiliaire (62,62′) présentant un élément d'obturation (64) coopérant avec un siège (58) disposé sur la partie d'obturation (44) et susceptible d'être soulevé de ce siège (58) à l'aide d'un dispositif d'entraînement (74) à alimentation électrique, caractérisé en ce que l'enceinte de pilotage (50) est limitée du côté opposé à la partie d'obturation (44) par un couvercle (48), en un matériau non magnétisable, et en ce que le dispositif d'entraînement (74) présente un agencement à aimant permanent (76), susceptible d'être mis en action et hors d'action sur l'élément d'obturation (64), au moyen d'un entraînement (94) à alimentation électrique par l'intermédiaire du couvercle (48), afin de soulever l'élément d'obturation (64) du siège (58) lors de son passage dans la zone du couvercle (48).

2. Soupape d'isolement selon la revendication 1, caractérisé en ce que le sens de déplacement de l'agencement à aimant permanent (76) est transversal à la direction de la force de rappel magnétique (F′) sur cet agencement (76).

3. Soupape d'isolement selon la revendication 2, caractérisé en ce que l'agencement à aimant permanent (76) est susceptible de pivoter autour d'un axe (80′), s'étendant sensiblement parallèlement à la direction de la force de rappel (F′).

4. Soupape d'isolement selon l'une quelconque des revendications 1 à 3, caractérisé en ce que l'agencement à aimant permanent (76) est disposé sur un corps pivotant (78), monté à rotation, de préférence susceptible d'être entraîné au moyen d'un moteur électrique (94).

5. Emploi de la soupape d'isolement selon l'une : quelconque des revendications 1 à 4,
dans une armature sanitaire (10) à commande électrique, en particulier une armature de lavabo.

6. Emploi selon la revendication 5,
caractérisé en ce que l'armature (10) présente une amenée d'eau chaude et une amenée d'eau froide (14,16) et une évacuation (32) chacune comportant une soupape d'isolement (22,24), propre à assurer l'isolement commandé du courant d'eau chaude et froide et disposée entre l'amenée (14,16) concernée et l'évacuation (32), les agencements à aimant permanent (76) destinés à l'actionnement des deux soupapes auxiliaires (62,62′) étant susceptible d'être mis en action et hors d'action à l'égard des éléments d'obturation (64) des soupapes auxiliaires (62,62′), au moyen d'un entraînement commun (94).

7. Emploi selon la revendication 6,
caractérisé en ce que les soupapes d'isolement (22,24) sont disposées l'une à côté de l'autre et sensiblement parallèlement entre elles dans l'armature (10), de préférence dans un corps de base commun (12), les agencements à aimant permanent (76) étant prévus sur un corps pivotant commun (78), susceptible de pivoter autour d'un axe de rotation (80′) s'étendant de préférence entre les soupapes d'isolement (22,24).

8. Emploi selon la revendication 7,
caractérisé en ce que le corps pivotant (78) présente un segment de roue dentée (92), coaxial par rapport à l'axe de rotation (80′), et engrenant avec un pignon (96) commandé par un entraînement électrique (94).

9. Emploi selon l'une quelconque des revendications 6 à 8, caractérisé en ce qu'en avant des deux soupapes d'isolement (22,24), est mis en circuit une soupape de mélange (28), présentant de préférence des sièges (104,106) annulaires, espacés l'un de l'autre, orientés sensiblement de façon alignée l'un par rapport à l'autre et dirigés l'un vers l'autre, qui délimitent des conduites (26,26′) provenant des soupapes d'isolement (22,24), un disque (108) étant déplaçable dans un sens et dans l'autre entre les sièges de soupapes (104,106) et coopérant avec ceux-ci par ses surfaces frontales, réalisés de préférence en un matériau ayant l'élasticité du caoutchouc, des ouvertures entre les sièges de soupape (104,106) et le disque (108) étant reliées à l'évacuation (32).
